Europäisches Patentamt

European Patent Office

Office européen des brevets

(11) Veröffentlichungsnummer: **0 293 033**
**A2**

## (12) EUROPÄISCHE PATENTANMELDUNG

(21) Anmeldenummer: 88200958.2

(22) Anmeldetag: 13.05.88

(51) Int. Cl.4: **G11B 15/675**

(30) Priorität: 25.05.87 DE 3717587
25.05.87 DE 3717599

(43) Veröffentlichungstag der Anmeldung:
**30.11.88 Patentblatt 88/48**

(84) Benannte Vertragsstaaten:
**DE FR GB IT**

(71) Anmelder: **Philips Patentverwaltung GmbH
Wendenstrasse 35 Postfach 10 51 49
D-2000 Hamburg 1(DE)**

(84) **DE**

(71) Anmelder: **N.V. Philips' Gloeilampenfabrieken
Groenewoudseweg 1
NL-5621 BA Eindhoven(NL)**

(84) **FR GB IT**

(72) Erfinder: **Kunze, Norbert
Mozartstrasse 7
D-6332 Ehringshausen(DE)**

(74) Vertreter: **Kupfermann, Fritz-Joachim,
Dipl.-Ing. et al
Philips Patentverwaltung GmbH
Wendenstrasse 35 Postfach 10 51 49
D-2000 Hamburg 1(DE)**

(54) **Magnetbandkassettengerät.**

(57) Die Erfindung bezieht sich auf ein Magnetbandkassettengerät, bei dem eine das Magnetband enthaltende Kassette (2) in einen Kassettenschacht einführbar ist und in dem Kassettenschacht (1) lose geführt ruhen kann vor oder nach dem Bewegen eines mit dem Kassettengehäuse beim Einführen bewegbaren Betätigungshebels (13), wobei der Betätigungshebel (13) mit einem Stößel (29) zusammenwirkt, der in der Einführstellung der Kassette gegen diese drückt, damit diese an freien Bewegungen im Kassettenschacht (1) gehindert ist. Der Stößelhebel (23) st als doppelarmiges Schwenkteil (23) ausgebildet, wobei der Stößel (29) an einem freien Ende (28) eines ersten Schwenkarmes (24) des Schwenkteiles (23) und die Verbindung zum Betätigungshebel (13) am Ende eines zweiten Schwenkarmes (25) dieses Schwenkteiles (23) vorgesehen ist. Die Verbindung zum Betätigungshebel ist entweder direkt oder über eine Übertotpunktfeder (135), die den Betätigungshebel (13) jeweils nach dem Überschreiten des Übertotpunktes selbstätig in eine Endstellung bewegt.

FIG.1

# Magnetbandkassettengerät

Die Erfindung bezieht sich auf ein Magnetbandkassettengerät, bei dem eine das Magnetband enthaltende Kassette in einen Kassettenschacht einführbar ist und in dem Kassettenschacht lose geführt ruhen kann vor oder nach einem Bewegen eines mit dem Kassettengehäuse beim Einführen bewegbaren Betätigungshebels, wobei der Betätigungshebel mit einem Stößel zusammenwirkt, der in der Einführstellung der Kassette gegen diese drückt.

Ein derartiges Magnetbandkassettengerät ist durch die EP-Patentanmeldung 84 200 448.3 bekannt. Das Laufwerk eines derartigen Magnetbandgerätes hat einen Kassettenschacht, in den die Kassette von Hand eingeschoben wird. In dem Kassettenschacht kann die Kassette lose geführt ruhen, ohne daß Laufwerksfunktionen in Gang gesetzt werden oder nachdem Laufwerksfunktionen am Ende eines Spielbetriebes die Kassette wieder in die lose geführte Lage zurückgeführt haben. In dieser lose geführten Lage ruht die Kassette in dem Kassettenschacht mit so viel Spiel, daß sie sich bei auf das Gerät ausgeübten Stößen bewegen und damit im Schacht klappern kann. Besonders bei der Anordnung eines derartigen Magnetbandkassettengerätes in einem Kraftwagen entstehen solche auf das Gerät einwirkenden Stöße und treten Klappererscheinungen auf, die für die Fahrzeuginsassen unangenehm sind.

Es ist an sich bekannt, bei Magnetbandkassettengeräten dem Klappern mittels eines Stößels entgegenzuwirken, der seitlich gegen eine Kassettenwand drückt und zum Klappern führende Bewegungen der Kassette unterdrückt. Dieser Stößel ist federbelastet und über eine Verbindungsstange mit einem Lifthebel verbunden, der Kassettenbewegungen auf das Laufwerk überträgt, um den Lift mit der Kassette beispielsweise in eine Spielposition zu überführen. Umgekehrt kann der Lifthebel auch im Rahmen der Auswurfbewegung Liftbewegungen in Ausschubbewegungen der Kassette umsetzen. Dieser bekannte Aufbau besteht aus einer Reihe von Einzelteilen inklusive einer Feder und ist damit aufwendig.

Es ist Aufgabe der Erfindung, ein Magnetbandkassettengerät zu schaffen, bei dem mit wenigen einfachen Bauteilen das Klappern einer Magnetbandkassette im Schacht eines Magnetbandgerätes verhütet wird.

Die gestellte Aufgabe wird erfindungsgemäß nach einer ersten Lösung dadurch gelöst, daß der Stößel an einem Stößelhebel angeordnet ist, der mit dem Betätigungshebel in formschlüssiger Verbindung steht, wobei der Stößel mit einer Auflaufschräge versehen ist, die beim Vorfahren des Stößels gegen die Kassette mit der Auflaufschräge form schlüssig gegen wenigstens eine Hauptwand des Kassettengehäuses drückt und das Kassettengehäuse mit der Hauptwand gegen eine Schachtwand drückt.

Da der Stößel unmittelbar an einem formschlüssig mit dem Betätigungshebel verbundenen Stößelhebel angeordnet ist, benötigt der Stößel selbst keine speziell nur für ihn vorgesehene Federvorspannung. Der Stößelhebel sorgt unmittelbar über den Betätigungshebel für die Bewegung des Stößels.

Nach einer weiteren Ausgestaltung der Erfindung ist vorgesehen, daß der Stößel in eine Öffnung der Kassette eingreift und die Auflaufschräge von innen her gegen die Hauptwand gedrückt wird. Wenn der Stößel in eine Öffnung der Kassette hineingreift, dann kann er mit seiner Auflaufschräge die Kassette anheben und gegen eine Schachtwand drücken. Damit ist eine sehr effektiv wirkende Maßnahme zur Verhinderung von Klappergeräuschen geschaffen.

Nach einer weiteren Ausgestaltung der Erfindung ist vorgesehen, daß der Stößelhebel als doppelarmiges Schwenkteil ausgebildet ist, wobei der Stößel an einem freien Ende eines ersten Schwenkarmes des Schwenkteiles und die formschlüssige Verbindung zum Betätigungshebel am freien Ende eines zweiten Schwenkarmes dieses Schwenkteiles vorgesehen ist. Der Stößelhebel hat damit den einfachst möglichen Aufbau, indem es praktisch nur ein schwenkbares Teil ist, welches vom Betätigungshebel verschwenkt wird.

Die Bewegungsübertragung wird nach einer weiteren Ausgestaltung der Erfindung auf einfache Weise dadurch erreicht, daß die formschlüssige Verbindung aus einem Führungsstift am zweiten Armende und einer den Führungsstift führenden Kulisse im Betätigungshebel gebildet ist. Dabei ist nach einer weiteren Ausgestaltung der Erfindung vorgesehen, daß das Schwenkteil um sein Zentrum zwischen den Schwenkarmen verschwenkbar ist.

Beim Magnetbandkassettengerät nach der vorher genannten EP-Patentanmeldung 84 200 448.3 wirkt auf den Betätigungshebel eine Übertotpunktfeder ein, die den Betätigungshebel jeweils nach dem Überschreiten des Übertotpunktes selbsttätig in eine Einzugs- oder Auswurfstellung bewegt.

Die vorher gestellte Aufgabe wird erfindungsgemäß nach einer zweiten Lösung dadurch gelöst, daß der Stößel an einem Stößelhebel angeordnet ist, der mit dem Betätigungshebel über die Übertotpunktfeder in formschlüssiger Verbindung steht, wobei die Übertotpunktfeder, die beim selbsttätigen Verschwenken des Betätigungshebels die Schwenkbewegung in gegenläufiger Bewegung mit vollzieht, an ihrem von der Angriffsstelle am Betätigungshebel abliegenden Abstützende eine Verlängerung aufweist, die am Stößelhebel angreift.

Die Eigenbewegung der Übertotpunktfeder, die ohnehin als Bauteil in dem Laufwerk des Geräetes vorhanden ist, wird damit ausgenutzt, den Stößel in der Ruhe- oder Einführstellung der Magnetbandkassette gegen diese zu drücken, womit diese dann an freien Bewegungen im Kassettenschacht gehindert ist. Damit wird zu einer Bewegungsblockierung der Magnetbandkassette in ihrer Ruhestellung im Kassettenschacht lediglich ein einziges zusätzliches Bauteil und eine dafür vorgesehene Lagerung erforderlich.

Nach einer weiteren Ausgestaltung der Erfindung ist vorgesehen, daß der Stößel als Gabel ausgebildet ist, die mit schrägen Auflaufflächen über die Kanten zweier Gehäusehauptwände greift. Durch das Übergreifen mit der Gabel wird die Kassette am Angriffsrand festgehalten und gegen die gegenüberliegende Wand des Kassettenschachtes gedrückt. Dadurch erfolgt eine sehr kräftige Verklemmung.

Nach einer weiteren Ausgestaltung der Erfindung ist vorgesehen, daß die Verlängerung in eine federnde Nase des Schwenkteiles eingreift. Über die federnde Nase wird ein Toleranzausgleich herbeigeführt, so daß bei den Bewegungen keine Verklemmungen auftreten können.

Ist der Stößelhebel nach einer weiteren Ausgestaltung der Erfindung als Schwenkteil ausgebildet, so läßt sich die federnde Nase bei geeigneter Werkstoffwahl im Kunststoffspritzteil anlegen.

Die Erfindung wird anhand der Zeichnung näher erläutert. Es zeigen:

Fig. 1 in Draufsicht einen Ausschnitt eines Laufwerkes eines Magnetbandkassettengerätes nach einem ersten Ausführungsbeispiel mit eingeschobener Kassette und mit einem Teil der Liftmechanik zum Überführen der Kassette in eine Betriebsstellung oder aus dieser heraus,

Fig. 2 einen Schnitt durch das Laufwerk längs der Linie II-II nach Fig. 1,

Fig. 3 eine Draufsicht auf ein Teil eines Laufwerkes eines Magnetbandkassettengerätes nach einem zweiten Ausführungsbeispiel mit einem auf eine Kassette einwirkenden, dem Entklappern dienenden Stößel,

Fig. 4 einen Schnitt durch das Laufwerk längs der Linie IV-IV nach Fig. 3.

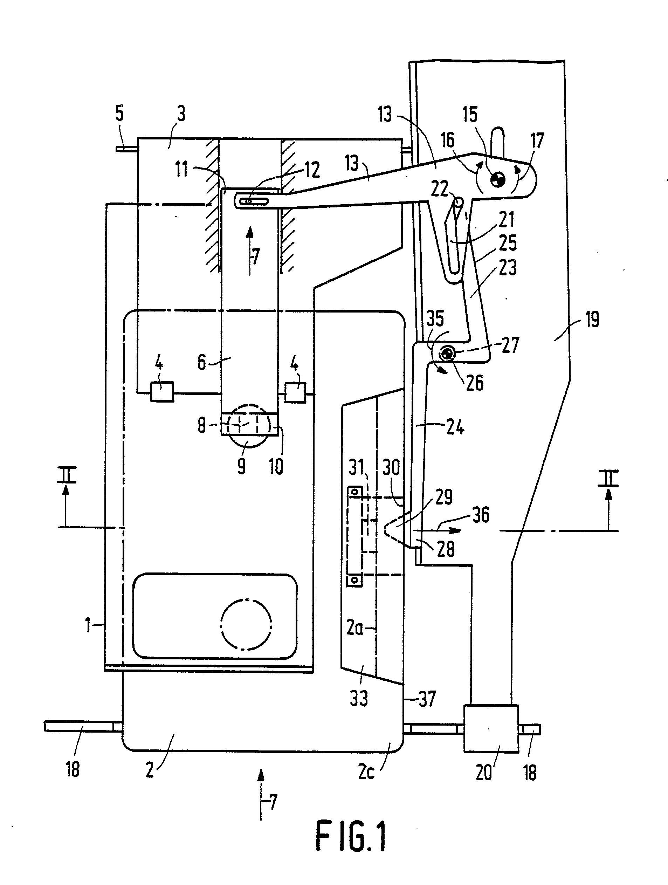

Die Darstellung nach Fig. 1 zeigt einen Ausschnitt aus dem Laufwerk eines Magnetbandkassettengerätes mit einem Kassettenschacht 1, in den eine Kompakt-Kassette 2 eingeschoben ist. Der Kassettenschacht 1 ist senkrecht zur Zeichenebene absenkbar mit Hilfe einer Liftklappe 3, die über Nasen 4 des Kassettenschachtes 1 gelenkig am Kassettenschacht 1 angreift. Die Liftklappe ist um eine Achse 5 verschwenkbar.

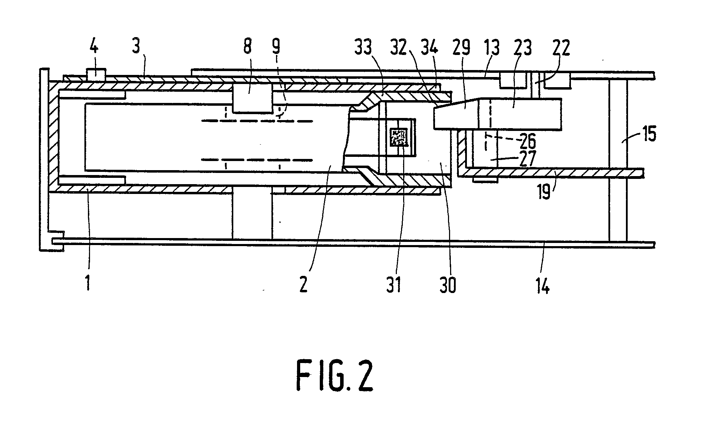

In der Liftklappe 3 ist ein Mitnehmerschieber 6 verschieblich geführt in Richtung eines die Einsteckrichtung andeutenden Pfeiles 7. Der Mitnehmerschieber 6 weist einen Mitnehmer 8 auf, der in ein Loch 9 des Gehäuses einer Kassette eingreifen kann, unter der einer der nicht dargestellten Wickelkerne der Magnetbandkassette 2 erreichbar ist. An dem dem Mitnehmerende 10 gegenüberliegenden Steuerende 11 des Mitnehmerschiebers 6 greift über eine Schlitz-Stiftverbindung 12 ein Lift- oder Betätigungshebel 18 an, der mittels einer nicht dargestellten Übertotpunktfeder in zwei entgegengesetzten Richtungen federbelastet schwenken kann. Der Lifthebel 13 ist drehbar an der in Fig. 2 angedeuteten Chassisplatte 14 des Laufwerkes gelagert. Die Drehachse ist mit 15 angegeben. Durch das Verschwenken des Lifthebels 13 von der in Fig. 1 dargestellten Auswurfstellung nach einer nicht dargestellten Einzugstellung wird auf nicht dargestellte Weise der Kassettenschacht 1 abgesenkt, wenn der Lifthebel in Richtung eines Pfeiles 16 durch ein tiefes Einschieben oder Einziehen der Magnetbandkassette 2 verschwenkt. Umgekehrt kann der Lifthebel 13, wenn er Entgegen dem Uhrzeigersinn in Richtung eines Pfeiles 17 verschwenkt wird, nach Beendigung des Spielbetriebes über den Mitnehmerschieber 6 nach dem Anheben des Kassettenschachtes 1 die Magnetbandkassette 2 mit Magnetband 2a in die aus Fig. 1 ersichtliche Stellung überführen. Diese in Fig. 1 dargestellte Stellung der Kassette ist eine sogenannte Ruhe- oder Einführstellung, in der die Magnetbandkassette 2 aus einer Vorderwand 18 des Gerätes so weit hervorsteht, daß die Magnetbandkassette 2 von Hand greifbar und herausziehbar ist. Auch beim Einschieben der Magnetbandkassette 2 von Hand verrastet diese zunächst sprübar in der in Fig. 1 dargestellten Einführstellung ein, weil nämlich der Mitnehmer 8 im Loch 9 des Kassettengehäuses einfällt. Dieses Einfallen ist in Fig. 2 deutlich zu erkennen.

Zu dem Laufwerk gehört eine Steuerstange 19, die ebenfalls in Richtung des Pfeiles 7 verstellbar ist. Zum Verstellen ist die Steuerstange 19 mit einem Betätigungsknopf 20 versehen, der aus der Vorderwand 18 des Gerätes hervorsteht. Die Bewegungsfunktion der Steuerstange 19 ist in der EP-Patentanmeldung 84 200 448.3 erläutert.

Der Lifthebel 13 ist mit einer Kulisse 21 versehen, in die ein Führungsstift 22 eines Stößelhebels 3 eingreift. Der Stößelhebel 23 ist ein doppelarmiger Hebel mit einem ersten Schwenkarm 24 und einem zweiten Schwenkarm 25. Der Stößelhebel 23 ist in seinem Zentrum um eine Achse 26 verschwenkbar. Hierzu ist ein Lagerstift 27 in der Steuerstange 19 festgesetzt.

Das freie Ende 28 des ersten Schwenkarmes 24 trägt einen Stößel 29, der in eine Öffnung 30 des Kassettengehäuses einfahren kann.

Fig. 1 zeigt eine gegenseitige Stellung von Lifthebel 13 und Stößelhebel 23, bei der der Lifthebel 13 über den Stößelhebel 23 den Stößel 29 in die Öffnung 30 der Vorderwand 37 des Kassettengehäuses hineingeschoben hat. Der Stößel 29 befindet sich vorzugsweise vor dem Andruckteil 31 der Kassette 2.

Aus Fig. 2 ist diese eingeschobene Stellung des Stößels 20 ersichtlich. Die Darstellung nach Fig. 2 zeigt darüber hinaus, daß der Stößel 29 mit einer Auflaufschräge 32 versehen ist, mit der der Stößel 29 bei seinem Einfahren in die Öffnung 30 gegen eine Gehäusehauptwand 33 des Kassettengehäuses drückt. Dies führt dazu, daß die Wand 33 ihrerseits gegen eine Wand 34 des Kassettenschachtes 1 stößt und die Kassette damit kein freies Spiel mehr hat, das zu einem Klappern Anlaß geben könnte.

Wird die Kassette 2 beispielsweise von Hand aus der Ruhestellung nach Fig. 1 weiter eingedrückt, dann schwenkt der Mitnehmerschieber 6 den Lifthebel 13 in Richtung des Pfeiles 16. Dies hat zur Folge, daß der Führungsstift 22 im Uhrzeigersinn in der Kulisse 21 mitgenommen wird und den Stößelhebel 23 in Richtung eines Pfeiles 35 verschwenkt. Der Stößel 29 hebt sich dabei in Richtung eines Pfeiles 36 aus der Öffnung 30 heraus, und die Verklemmung der Kassette wird aufgehoben. So kann die Kassette 2 ungehindert vom Stößel 29 weiter eingeführt werden.

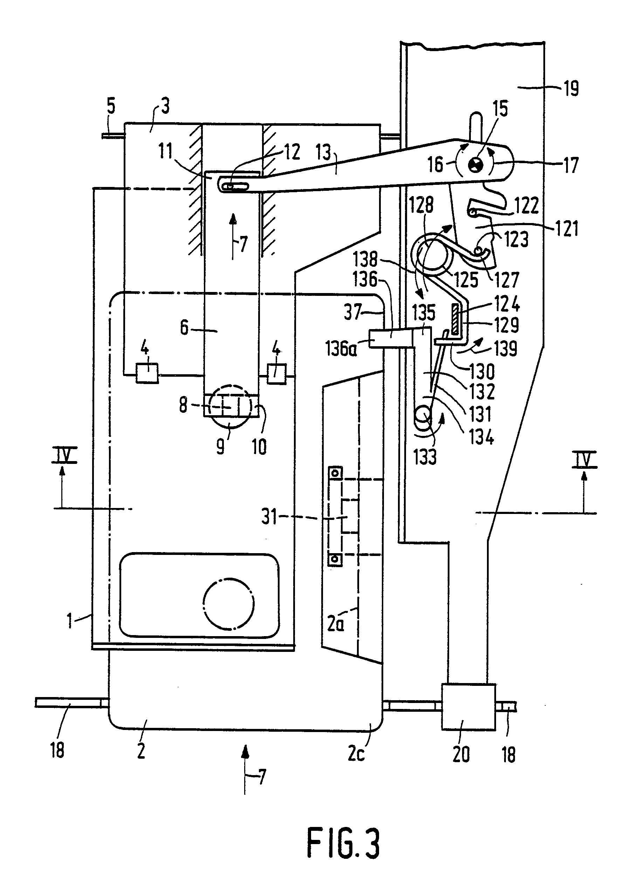

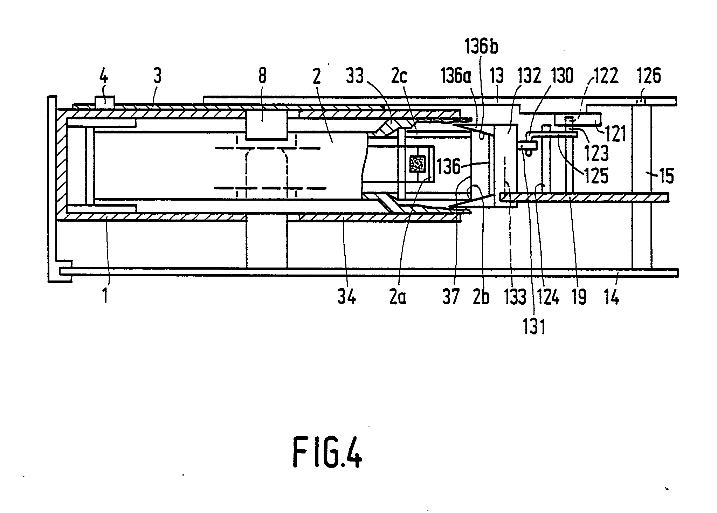

In dem zweiten Ausführungsbeispiel des Magnetbandkassettengerätes nach Fig. 3 und 4 ist der Lifthebel 13 mit einem Ansatz 121 versehen, in den ein Führungsstift 122 der Steuerstange 19 eingreift. Der Ansatz 121 weist außerdem ein Gegenlager 123 auf. Aus der Steuerstange ist ein Lappen 124 nach oben abgebogen. Das Gegenlager 123 und der Lappen 124 bilden Abstützungen für eine Übertotpunktfeder 125. In beiden Bewegungsrichtungen des Lifthebels 13 wird die Übertotpunktfeder 125 wirksam. Überschreitet der Lifthebel 13 mit seiner Stellung den Übertotpunkt, dann schiebt die Übertotpunktfeder 125 den Lifthebel 13 selbsttätig in die gerade vollzogene Bewegungsrichtung 16 oder 17 weiter nach der Einzugstellung bzw. der Auswurfstellung. Dabei durchfährt die Übertotpunktfeder 125 eine Schwenkbewegung, die der Schwenkbewegung des Lifthebels 13 entgegen verläuft. Dies beruht darauf, daß das Gegenlager 123 um das Lager 126 des Lifthebels 13 schwenkt und das am Gegenlager 123 angreifende Ende 127 der Übertotpunktfeder 125 dieses Ende 127 um das Lager 125 einen Kreisbogen beschreiben läßt. Die Bewegung der Übertotpunktfeder 125 ist durch den gebogenen Pfeil 128 angedeutet. Eine ausführliche Beschreibung der Funktionsweise findet sich in der genannten EP-Patentanmeldung 84 200 448.3.

Das an der Abstützung 24 anliegende Ende 129 der Übertotpunktfeder 125 ist mit einer Verlängerung 130 versehen, die durch eine federnde Nase 131 eines als Schwenkteil ausgebildeten Hebels 132 greift. Das Schwenkteil 132 ist ein Kunststoffspritzteil, das um eine Achse 133 drehbar ist. Das Lager befindet sich in einem Ende 134 des Schwenkteiles 132. Von diesem Ende 134 steht die federnde Nase 131 ab. An einem der Achse 133 gegenüberliegenden Ende 135 des Schwenkteiles 132 befindet sich ein gabelförmiger Stößel 136. Gabelzinken 136a des Stößels 136 haben schräge Auflaufkanten 136b. Diese schrägen Auflaufkanten 136b übergreifen klemmend die Kanten 2b von Kassettenhauptwänden 2c, die von der Vorderwand 137 auseinandergehalten werden. In Fig. 4 ist das klemmende Übergreifen des Stößels 36 deutlich dargestellt.

Wird die Magnetbandkassette 2 tiefer in den Kassettenschacht eingeschoben und damit der Lifthebel 13 in Richtung des Pfeiles 16 verschwenkt, dann kippt die Übertotpunktfeder 125 in Richtung eines Pfeiles 138, was zur Folge hat, daß die Verlängerung 130 in Richtung eines Pfeiles 139 verschwenkt. Die Verlängerung 130 nimmt dann den Schwenkteil 132 im Uhrzeigersinn mit und hebt den Stößel 36 von der Wand 137 der Magnetbandkassette 2 ab, so daß der Weg zum Absenken frei wird.

Wird am Ende eines Spielbetriebes durch Betätigung des Knopfes 20 der Lifthebel 13 in Richtung des Pfeiles 17 entgegen dem Uhrzeigersinn verschwenkt, dann schwenkt die Übertotpunktfeder 125 in Richtung des Pfeiles 128, und die Verlängerung 130 drückt den Stößel 136 gegen die Kanten 2b des Gehäuses der Magnetbandkassette. Auf diese Art und Weise wird die Magnetbandkassette 2 in Richtung der Ruhestellung nach Fig. 1 zurückgeschoben, durch Reibung zwischen die Auflaufkanten 136b der Gabelzinken 136a und die Kanten 2b des Kassettengehäuses abgebremst und durch den Mitnehmer 8 in die Ruhestellung verrastet. Auch nun werden Klappergeräusche der Magnetbandkassette 2 in dem Kassettenschacht 1 unterdrückt.

## Ansprüche

1. Magnetbandkassettengerät, bei dem eine das Magnetband enthaltende Kassette (2) in einen Kassettenschacht (1) einführbar ist und in dem Kassettenschacht (1) lose geführt ruhen kann vor oder nach einem Bewegen eines mit dem Kassettengehäuse beim Einführen bewegbaren Betätigungshebels (13), wobei der Betätigungshebel (13) mit einem Stößel (29) zusammenwirkt, der in der Einführstellung der Kassette gegen diese drückt, dadurch gekennzeichnet, daß der Stößel (29) an einem Stößelhebel (23) angeordnet ist, der mit dem Betätigungshebel (13) in formschlüssiger Verbindung steht, wobei der Stößel (29) mit einer Auflaufschräge (32) versehen ist, die beim Vorfahren des Stößels (29) gegen die Kassette mit der Auflaufschräge (32) formschlüssig gegen wenigstens eine Hauptwand (33) des Kassettengehäuses drückt und das Kassettengehäuse mit der Hauptwand (33) gegen die Schachtwand (34) drückt.

2. Magnetbandkassettengerät nach Anspruch 1, dadurch gekennzeichnet, daß der Stößel (29) in eine Öffnung der Kassette eingreift und die Auflaufschräge (32) von innen her gegen die Hauptwand (33) gedrückt wird.

3. Magnetbandkassettengerät nach einem der Ansprüche 1 oder 2, dadurch gekennzeichnet, daß der Stößelhebel (23) als Schwenkteil (23) ausgebildet ist, wobei der Stößel (29) an einem freien Ende (28) eines ersten Schwenkarmes (24) des Schwenkteiles (23) und die formschlüssige Verbindung zum Betätigungshebel (13) am freien Ende eines zweiten Schwenkarmes (25) dieses Schwenkteiles (23) vorgesehen ist.

4. Magnetbandkassettengerät nach einem der Ansprüche 1 bis 3, dadurch gekennzeichnet, daß die formschlüssige Verbindung aus einem Führungsstift (22) am zweiten Armende und einer den Führungsstift (22) führenden Kulisse (21) im Betätigungshebel (13) gebildet ist.

5. Magnetbandkassettengerät nach Anspruch 3 oder 4, dadurch gekennzeichnet, daß das Schwenkteil (23) um sein Zentrum (26) zwischen den Schwenkarmen (24, 25) verschwenkbar ist.

6. Magnetbandkassettengerät, bei dem eine das Magnetband enthaltende Kassette (2) in einen Kassettenschacht (1) einführbar ist und in dem Kassettenschacht (1) lose geführt ruhen kann vor oder nach einem Bewegen eines mit dem Kassettengehäuse bewegbaren Betätigungshebels (13), wobei der Betätigungshebel (13) mit einem Stößel (136) zusammenwirkt, der in der Einführstellung der Kassette (2) gegen diese drückt, auf welchen Betätigungshebel eine Übertotpunktfeder (125) einwirkt, die den Betätigungshebel (13) jeweils nach dem Überschreiten des Übertotpunktes selbsttätig in eine Einzug- oder Auswurfsstellung bewegt, dadurch gekennzeichnet, daß der Stößel (136) an einem Stößelhebel (132) angeordnet ist, der mit dem Betätigungshebel (13) über die Übertotpunktfeder (125) in formschlüssiger Verbindung steht, wobei die Übertotpunktfeder (125), die beim selbsttätigen Verschwenken des Betätigungshebels (13) die Schwenkbewegung in gegenläufiger Bewegung mit vollzieht, an ihrem von der Angriffsstelle (123) am Betätigungshebel (13) abliegenden Abstütztende (129) eine Verlängerung (130) aufweist, die am Stößelhebel (132) angreift.

7. Magnetbandkassettengerät nach Anspruch 6, dadurch gekennzeichnet, daß der Stößel (136) als Gabel ausgebildet ist, die mit schrägen Auflaufflächen (136b) über Kanten (2b) zweier Gehäusehauptwände (2c) greift.

8. Magnetbandkassettengerät nach Anspruch 6, dadurch gekennzeichnet, daß die Verlängerung (130) der Übertotpunktfeder (135) in eine federnde Nase (131) des Stößelhebels (32) eingreift.

9. Magnetbandkassettengerät nach einem der vorhergehenden Ansprüche, dadurch gekennzeichnet, daß der Stößelhebel als Schwenkteil (23; 132) ausgebildet ist, das ein Kunststoffspritzteil ist.

FIG.1

FIG.2

FIG.3

**FIG.4**